# EUROPÄISCHE PATENTANMELDUNG

(11) **EP 2 998 010 A2**
(43) Veröffentlichungstag der Anmeldung: **23.03.2016**
(21) Anmeldenummer: 15156553.8
(22) Anmeldetag: 25.02.2015
(51) Int. Cl.: B01D 46/00

(54) **Filterrahmen zum Fixieren von zumindest einem Filterelement**

(30) Priorität: 19.09.2014 EP 14185516
(71) Anmelder: TROX GmbH, 47506 Neukirchen-Vluyn (DE)
(72) Erfinder: Paeßens, Dirk, 47589 Uedem (DE); Pollmann, Pascal, 46485 Wesel (DE)
(74) Vertreter: DR. STARK & PARTNER

(57) **Zusammenfassung**

Die Erfindung betrifft einen Filterrahmen zum Fixieren von zumindest einem Filterelement, wobei der Filterrahmen eckig, insbesondere viereckig, ausgebildet ist und aus zumindest zwei Filterrahmenelementen besteht und wobei die beiden Enden zweier benachbarter Filterrahmenelemente unter Bildung jeweils eines Verbindungsbereichs miteinander starr verbunden sind. Um einen Filterrahmen anzugeben, der eine größere Stabilität im montierten Zustand hat, soll jedes Filterrahmenelement so ausgebildet sein, dass seine beiden Enden und damit seine beiden Verbindungsbereiche unter Bildung entsprechender Filterrahmenelementabschnitte jeweils zwischen zwei benachbarten Ecken des Filterrahmens angeordnet sind, wobei zumindest eine der jeweiligen zwei benachbarten Ecken, zwischen denen jeweils die beiden Enden liegen, nicht übereinstimmend ist und somit jedes Filterrahmenelement zumindest eine Ecke des aus den Filterrahmenelementen zusammengesetzten Filterrahmens umfasst.

## Beschreibung

Die Erfindung betrifft einen Filterrahmen zum Fixieren von zumindest einem Filterelement, wobei der Filterrahmen eckig, insbesondere viereckig, ausgebildet ist und aus zumindest zwei Filterrahmenelementen besteht und wobei die beiden Enden zweier benachbarter Filterrahmenelemente unter Bildung jeweils eines Verbindungsbereichs miteinander starr verbunden sind.

Auf dem Gebiet der Klimatisierungstechnik von Gebäuden werden zur Reinigung von Luftströmen Filterelemente verwendet. Derartige Filterelemente müssen beispielsweise bei einer Verschmutzung leicht austauschbar sein. Hierzu ist ein Halterahmen vorgesehen, der umfangsseitig beispielsweise mit einer Kanalwandung verbunden ist. Der Halterahmen kann beispielsweise vertikal oder horizontal ausgerichtet sein. Das Filterelement wird in einen Filter-rahmen auf eine geeignete Weise eingesetzt und fixiert. Anschließend wird der umlaufende Filterrahmen zusammen mit dem daran fixierten Filterelement in den Halterahmen eingesetzt. In dem Halterahmen wird der Filterrahmen beispielsweise mittels Fixiereinrichtungen entgegen die Einführrichtung des Filterelementes blockiert. Das Filterelement kann unterschiedlich ausgebildet sein. So kann das Filterelement beispielsweise Taschen- oder Beutelfilter umfassen, die nebeneinander angeordnet sind.

Nachteilig ist, dass bekannte Filterrahmen eine geringe Stabilität aufweisen, da sie aus vier Kunststoffprofilen bestehen, die im Bereich der vier Ecken des Filterrahmens durch Eckverbinder verbunden sind. Damit weist der viereckige Filterrahmen insgesamt acht Verbindungsbereiche auf. Da die Fixiereinrichtungen insbesondere in den vier Ecken auf den Filterrahmen wirken, kommt es zu einer Durchbiegung des Filterrahmens zwischen benachbarten Ecken, so dass in diesen Bereichen, d.h. in den hochgebogenen Bereichen, der Filterrahmen nicht hinreichend mit dem Halterahmen in Kontakt ist.

Aufgabe der Erfindung ist es, die vorgenannten Nachteile zu vermeiden und einen Filterrahmen anzugeben, der eine größere Stabilität im montierten Zustand hat.

Diese Aufgabe wird dadurch gelöst, dass jedes Filterrahmenelement so ausgebildet ist, dass seine beiden Enden und damit seine beiden Verbindungsbereiche unter Bildung entsprechender Filterrahmenelementabschnitte jeweils zwischen zwei benachbarten Ecken des Filterrahmens angeordnet sind, wobei zumindest eine der jeweiligen zwei benachbarten Ecken, zwischen denen jeweils die beiden Enden liegen, nicht übereinstimmend ist und somit jedes Filterrahmenelement zumindest eine Ecke des aus den Filterrahmenelementen zusammengesetzten Filterrahmens umfasst.

Unter einem Filterrahmenelementabschnitt wird die geradlinige Längserstreckung verstanden, die kürzer als die Länge von einer Ecke zur benachbarten Ecke ist. Der Filterrahmen und vorzugsweise auch der Halterahmen sind umlaufend ausgebildet. Durch die erfindungsgemäße Ausgestaltung sind die Verbindungsbereiche nicht mehr in den Ecken des Filterrahmens, sondern befinden sich im Bereich einer Seite zwischen zwei benachbarten Ecken. Damit kommt dem Filterrahmen eine höhere Stabilität zu, so dass der Filterrahmen über seinen kompletten Umfang im montierten Zustand in dem gewünschten Kontakt mit dem Halterahmen ist.

Es ist beispielsweise denkbar, dass jedes Filterrahmenelement die Form eines "U" aufweist, so dass ein entsprechend hergestellter Filterrahmen lediglich zwei Verbindungsbereiche aufweist. Bei einer solchen Ausgestaltung umfasst jedes Filterrahmenelement zwei Ecken des Filterrahmens und weist zwei Filterrahmenelementabschnitte auf, die über einen dritten Abschnitt, dessen Länge dem Abstand zwischen zwei benachbarten Ecken entspricht, zu einem "U" verbunden sind. Auf diese Weise kann ein viereckiger Filterrahmen aus zwei Filterrahmenelementen hergestellt werden. Die Länge der Filterrahmenelementabschnitte bestimmt die Anordnung des jeweiligen Verbindungsbereiches zwischen zwei benachbarten Ecken.

Zumindest ein Filterrahmenelement kann als Winkel ausgebildet sein und kann aus zwei, insbesondere in einem rechten Winkel, winklig zueinander angeordneten Filterrahmenelementabschnitten bestehen. Bei einer solchen Anordnung kann ein viereckiger Filterrahmen beispielsweise aus insgesamt vier Filterrahmenelementen hergestellt werden. In diesem Fall weist der Filterrahmen insgesamt vier Verbindungsbereiche auf.

Zumindest ein Filterrahmenelement kann an seinem einen freien Ende ein Einführelement, insbesondere in Form eines gegenüber dem Ende des Einführelementes in Längserstreckung vorstehenden Bereichs, aufweisen und kann an seinem anderen freien Ende einen mit dem Einführelement des benachbarten Filterrahmenelementes korrespondierenden Einführbereich zur Aufnahme eines Einführelementes aufweisen. Für die Montage des Filterrahmens muss lediglich das Einführelement in den korrespondierenden Einführbereich des benachbarten Filterrahmenelementes eingeführt werden.

Das Einführelement kann beispielsweise als Zunge ausgebildet sein. In diesem Fall weist das Einführelement lediglich eine geringe Dicke auf und erstreckt sich insoweit primär in einer Ebene.

Das Einführelement kann einen in orthogonaler Richtung zur Einführrichtung gesehen vorstehenden Rastvorsprung und der mit diesem Einführelement zusammenwirkende Einführbereich des benachbarten Filterrahmenelementes eine mit dem Rastvorsprung korrespondierende Ausnehmung aufweisen. In der Fixierposition befindet sich der Rastvorsprung im montierten Zustand in der korrespondierenden Ausnehmung und verhindert so ein unbeabsichtigtes Lösen zweier verbundener Filterrahmenelemente.

Alternativ kann der Einführbereich einen in orthogonaler Richtung zur Einführrichtung gesehen vorstehenden Rastvorsprung aufweisen, und das mit diesem Einführbereich zusammenwirkende Einführelement des benachbarten Filterrahmenelementes kann eine mit dem Rastvorsprung korrespondierende Ausnehmung aufweisen.

Zumindest ein Rastvorsprung kann als Verdickung ausgebildet sein. Es ist beispielsweise möglich, dass der Rastvorsprung elastisch ausgebildet ist. Alternativ oder in Ergänzung kann der den Rastvorsprung tragende Bereich des Einführelementes entsprechend verlagerbar sein. Selbstverständlich ist es auch möglich, dass der die Ausnehmung bildende Bereich des Einführbereiches entsprechend verlagerbar ist.

Zumindest ein Rastvorsprung kann gegen eine Rückstellkraft vorübergehend aus seiner Fixierposition in seine Freigabeposition verlagerbar sein.

Zumindest ein Filterrahmenelement kann eine Sollbruchstelle zur werkzeuglosen Verkürzung aufweisen. Damit können mit dem Filterrahmenelement Filterrahmen unterschiedlicher Größe zusammengesteckt werden. Sofern eine Verkürzung gewünscht ist, muss das Filterrahmenelement lediglich an der entsprechenden Sollbruchstelle durch Abbrechen verkürzt werden und kann dann zur Herstellung eines Filterrahmens mit einem benachbarten Filterrahmenelement verbunden werden.

Zumindest ein Filterrahmenelement kann mittels eines an einem der beiden Enden des Filterrahmenelementes anbringbaren Verlängerungselementes verlängerbar sein, wobei ein Ende des Verlängerungselementes ein Einführelement, insbesondere in Form eines gegenüber dem Ende des Verlängerungselementes in Längserstreckung vorstehenden Bereichs, und das andere freie Ende einen Einführbereich aufweisen. Das Einführelement und der Einführbereich des Verlängerungselementes sind so ausgebildet, dass diese mit dem korrespondierenden Einführbereich bzw. mit dem korrespondierenden Einführelement des(der) zu verbindenden Filterrahmenelemente(s) bzw. des(der) zu verbindenden weiteren Verlängerungselemente(s) korrespondieren.

Zumindest ein Filterrahmenelement kann aus Kunststoff bestehen. Es sind aber auch andere Materialien möglich.

Zumindest ein Filterrahmenelement kann eine Verstärkung, insbesondere in Form einer Verrippung, aufweisen.

Dabei kann der Filterrahmen zumindest ein Befestigungsmittel für das Filterelement aufweisen. Als Befestigungsmittel kann beispielsweise ein Kleber oder ein Vorsprung vorgesehen sein, wobei der Vorsprung als Abschnitt oder umlaufend ausgebildet sein kann. Der Vorsprung kann beispielsweise auf den Außenrand des Filterrahmens wirken.

Zumindest ein Befestigungsmittel kann als ein, gegenüber der Innenseite des Filterrahmens innenseitig vorstehendes, leistenförmiges oder rahmenförmiges Anlageelement ausgebildet sein, welches an dem Filterrahmen, insbesondere lösbar, zum Halten des Filterelementes anbringbar ist. Im montierten Zustand liegt der Filterrahmen auf dem Anlageelement an, wobei vorzugsweise zumindest ein Anlageelement auf der der Strömung abgewandten Seite des Filterrahmens angeordnet ist. Vorzugsweise sind zwei, im Abstand zueinander und eine U-förmige Aufnahme bildende Anlageelemente vorgesehen, so dass der Rand des Filterelementes von den Anlageelementen umfasst wird.

Die Form und die Anzahl des Anlageelementes / der Anlageelemente können derart ausgebildet sein, dass aus den Anlageelementen ein entsprechend dem Filterrahmen umlaufend ausgebildeter Anlagerahmen gebildet wird. Der Anlagerahmen kann beispielsweise durch Verkleben an dem Filterrahmen befestigt werden.

Wenigstens ein Anlageelement kann einstückig als Bestandteil des angrenzenden Filterrahmenelementes ausgebildet sein.

Wenigstens ein Anlageelement zumindest eines Anlagerahmens kann lösbar, insbesondere durch Klemmung lösbar, an dem(den) angrenzenden Filterrahmenelement(en) des Filterrahmens fixierbar sein.

Bei zumindest einem, insbesondere jedem, Anlageelement kann die körperliche Ausgestaltung so sein, dass seine beiden Enden im montierten Zustand jeweils zwischen zwei benachbarten Ecken des Filterrahmens angeordnet sind, wobei zumindest eine der jeweiligen zwei benachbarten Ecken, zwischen denen jeweils die beiden Enden liegen, nicht übereinstimmend ist und somit das zumindest eine Anlageelement zumindest eine Ecke des Filterrahmens umfasst. Damit liegen die beiden Enden eines Anlageelementes nicht in den Ecken. Jedes Anlageelementes geht insoweit um zumindest eine Ecke des Filterrahmens "herum".

Es bietet sich an, wenn sich die beiden Enden zweier benachbarter Anlageelemente unter Bildung eines Berührungsbereichs miteinander berühren und die Verbindungsbereiche zwischen zwei Enden zweier benachbarter Filterrahmenelementabschnitte versetzt zu den Berührungsbereichen zwischen zwei Enden zweier benachbarter Anlageelemente angeordnet sind. Die versetzte Anordnung der Berührungsbereiche und der Verbindungsbereiche führt zu einer weiteren Erhöhung der Stabilität des Filterrahmens.

Zumindest ein Anlageelement kann wenigstens ein in Richtung des angrenzenden Filterrahmenelements weisendes, insbesondere linienförmig ausgebildetes, Einführelement aufweisen, und das angrenzende Filterrahmenelement kann wenigstens einen, mit dem(den) Einführelement(en) korrespondierenden, insbesondere nutenförmig ausgebildeten, Klemmbereich aufweisen. Dabei kann vorzugsweise die Montagerichtung zum Einführen eines Einführelementes in den korrespondierenden Klemmbereich orthogonal zu der von dem Filterahmen aufgespannten Ebene ausgerichtet sein. Hierdurch ist eine einfache werkzeuglose Montage und auch spätere Demontage zum Zwecke eines Wechsels des Filterelementes gewährleistet. Jedem Einführelement kann beispielsweise ein separater Klemmbereich zugeordnet sein. Es ist aber auch durchaus möglich, dass ein sich über die komplette Länge eines Filterrahmenelementes erstreckender Klemmbereich vorgesehen ist, der mehrere Einführelemente - auch unterschiedlicher Anlageelemente - aufnehmen kann. Selbstverständlich ist auch eine umgekehrte Anordnung von Klemmbereich und Einführelement denkbar.

Dabei kann sich bei zumindest einem Anlageelement das Einführelement über die ganze Länge des Anlageelementes erstrecken, und der Klemmbereich kann sich bei dem(den) angrenzenden Filterrahmenelement(en) ebenfalls über die Länge des jeweiligen Filterrahmenelementes erstrecken.

Die Materialstärke/Materialdicke zumindest eines Einführelementes kann von seinem freien Ende gesehen zunehmen. Die Zunahme kann kontinuierlich oder diskontinuierlich erfolgen. Durch die hieraus resultierende pfeilartige Ausgestaltung wird das Einführen des Einführelementes in den Klemmbereich erleichtert.

Wenigstens ein Einführelement kann auf seiner, mit dem Klemmbereich zusammenwirkenden Außenseite zumindest einen Klemmvorsprung aufweisen. Vorzugsweise nimmt die Höhe des Klemmvorsprungs, d.h. der Abstand zwischen dem Einführelement und der mit dem Klemmbereich zusammenwirkenden Außenseite, entgegen die Montagerichtung gesehen zu, so dass das Einführen erleichtert wird und mit steigendem Einführgrad die von dem Klemmbereich auf den Klemmvorsprung wirkende Klemmkraft zunimmt. Durch die Zunahme erfolgt insoweit mit zunehmendem Einführen des Einführelementes in den Klemmbereich eine stärkere Klemmung.

Dabei kann wenigstens ein Einführelement im Bereich einer Ecke die größte Höhe H aufweisen, und die Höhe H des Einführelementes kann zu seinen beiden freien Enden, insbesondere kontinuierlich, abnehmen. Bei einer solchen Ausgestaltung erstreckt sich das Einführelement zumindest über einen nicht unbeachtlichen Teil der Länge des Anlageelementes, vorzugsweise über die vollständige Länge des betreffenden Anlageelementes. Das Einführelement weist im Bereich der umfassten Ecke die größte Höhe H auf, wobei die Höhe H des Einführelementes zu den beiden freien Enden des Einführelementes kontinuierlich abnimmt. Sofern über die Länge des Anlageelementes gesehen mehrere Einführelemente vorgesehen sind, weist das Einführelemente im Bereich der umfassten Ecke die größte Höhe H auf, während die Höhe H der Einführelemente zu den beiden freien Enden des Anlageelementes abnimmt.

Zumindest ein Anlageelement kann wenigstens einen Halteabschnitt zum Halten des Randes eines in dem Filterrahmen angeordneten Filterelementes aufweisen.

Dabei kann zumindest ein Halteabschnitt eine derart gewölbt oder schräg ausgerichtete und mit dem Filterelement zusammenwirkende Kontaktfläche aufweisen, dass der Rand des in dem Filterrahmen angeordneten Filterelementes bei der Montage durch die Kontaktfläche nach außen verlagert wird. Hierdurch wird das Filterelement fixiert und gleichzeitig auch ausgerichtet.

Die Erfindung betrifft auch ein System umfassend einen Halterahmen, einen in den Halterahmen einsetzbaren Filterrahmen sowie zumindest ein an dem Filterrahmen fixiertes Filterelement, wobei der Halterahmen eckig, insbesondere viereckig, ausgebildet ist und einen L-förmigen Querschnitt mit einem Anlageschenkel und mit einem daran außenseitig angeformten Seitenschenkel hat, und wobei die innere Kontur des Halterahmens so auf die äußere Kontur des Filterrahmens abgestimmt ist, dass der Filterrahmen reversibel in den Halterahmen einsetzbar sind und der Filterrahmen mittels zumindest zweier über den Umfang des Filterrahmens verteilt angeordneter Fixiereinrichtungen entgegen der Einführrichtung gegenüber dem Halterahmen blockierbar, insbesondere fixierbar, ist und wobei der Filterrahmen nach einem der Ansprüche 1 bis 12 ausgebildet ist.

Zumindest eine Fixiereinrichtung kann beispielsweise ein elastisch ausgebildetes und/oder federnd gelagertes Fixierelement mit einem Kontaktbereich umfassen, wobei das Fixierelement aus seiner Fixierposition, in der es den Filterrahmen mit dem daran fixierten Filterelement in dem Halterahmen blockiert, insbesondere fixiert, zum Einsetzen des Filterrahmens mit dem daran fixierten Filterelement in den Halterahmen bzw. zum Entfernen des Filterrahmens mit dem daran fixierten Filterelement aus dem Halterahmen gegen seine Rückstellkraft in Richtung des angrenzenden Seitenschenkels vorübergehend verlagerbar sein und aufgrund seiner Rückstellkraft eine anschließende automatische Zurückverlagerung wieder in seine Fixierposition gegeben sein.

Der Halterahmen weist üblicherweise im Bereich seiner Seitenschenkel Bohrungen auf, durch welche Schrauben oder Nieten zur Fixierung des Halterahmens an der Innenseite eines Kanals geführt sind. Die Fixiereinrichtungen sind zumindest in etwa gleichmäßig über den Umfang verteilt. Sofern es sich beispielsweise um einen viereckigen Halterahmen handelt, kann beispielsweise in den vier Ecken jeweils eine Fixiereinrichtung angeordnet sein.

Für den Einbau muss lediglich der Filterrahmen mit dem daran fixierten Filterelement in den Halterahmen hineingedrückt werden. Dabei werden die Fixierelemente gegen ihre Rückstellkraft nach auswärts, d. h. in Richtung des angrenzenden Seitenschenkels verlagert. Hat der Filterrahmen mit dem daran fixierten Filterelement die Fixierelemente passiert, erfolgt eine automatische Zurückverlagerung der Fixierelemente, so dass der Filterrahmen mit dem daran fixierten Filterelement durch die auf den Filterrahmen wirkenden Kontaktbereiche der Fixierelemente sicher blockiert und gehalten wird und eventuell auch eine Anpressung in den Halterahmen erfolgt.

Soll der Filterrahmen mit dem daran fixierten Filterelement wieder entfernt werden, müssen lediglich ein oder mehrere Fixierelemente gegen ihre Rückstellkraft nach außen verlagert werden, so dass dann der Filterrahmen mit dem daran fixierten Filterelement herausgenommen werden kann. Die Abmessungen der Fixierelemente sind so gewählt, dass der Filterrahmen mit dem daran fixierten Filterelement entgegen der Einführrichtung in dem Halterahmen blockiert ist. Der Kontaktbereich kann als Linie oder als Fläche ausgebildet sein.

Der Abstand zwischen dem Anlageschenkel einerseits und dem Kontaktbereich einer Fixiereinrichtung andererseits kann zumindest in etwa der Dicke, insbesondere genau der Dicke, des Filterrahmens in dem fixierten Bereich des Filterrahmens entsprechen. Dies bewirkt eine sichere Blockierung, insbesondere Fixierung, des Filterrahmens mit dem daran fixierten Filterelement in dem Halterahmen.

Es bietet sich an, wenn zwischen der inneren Kontur des Halterahmens einerseits und der äußeren Kontur des Filterrahmens andererseits ein Spiel von etwa 2 bis 10 mm in jeder zu zumindest einer Seite orthogonalen Richtung ist. Durch das geringe Spiel wird erreicht, dass der Filterrahmen in der blockierten Position richtig gegenüber dem Halterahmen ausgerichtet ist.

Im Folgenden werden in den Zeichnungen dargestellte Ausführungsbeispiele der Erfindung erläutert. Es zeigen:
- Fig. 1: eine schräge Draufsicht auf einen erfindungsgemäßen Filterrahmen mit einer quadratischen Ausgestaltung,
- Fig. 2: eine schräge Draufsicht auf einen erfindungsgemäßen Filterrahmen mit einer rechteckigen Ausgestaltung,
- Fig. 3: eine schräge Draufsicht auf ein einzelnes Filterrahmenelement,
- Fig. 4-7: unterschiedliche Ansichten des Gegenstandes nach Fig. 3,
- Fig. 8: ein erstes Ausführungsbeispiel eines Verlängerungselementes,
- Fig. 9: ein zweites Ausführungsbeispiel eines Verlängerungselementes,
- Fig. 10+11: schräge Draufsichten auf ein System bestehend aus einem Halterahmen und einem darin eingesetzten Filterrahmen mit einem an dem Filterrahmen fixierten Filterelement,
- Fig. 12: eine schräge Draufsicht auf eine andere Ausführungsform eines erfindungsgemäßen Filterrahmens,
- Fig. 13: eine schräge Ansicht eines Filterrahmenelementes,
- Fig. 14: eine schräge Ansicht eines Rahmenelementes,
- Fig. 15: einen Schnitt durch einen Filterrahmen nach Fig. 12 und
- Fig. 16a-c: drei Varianten an unterschiedlich zusammengesetzten Filterrahmen.

In allen Figuren werden für gleiche bzw. gleichartige Bauteile übereinstimmende Bezugszeichen verwendet.

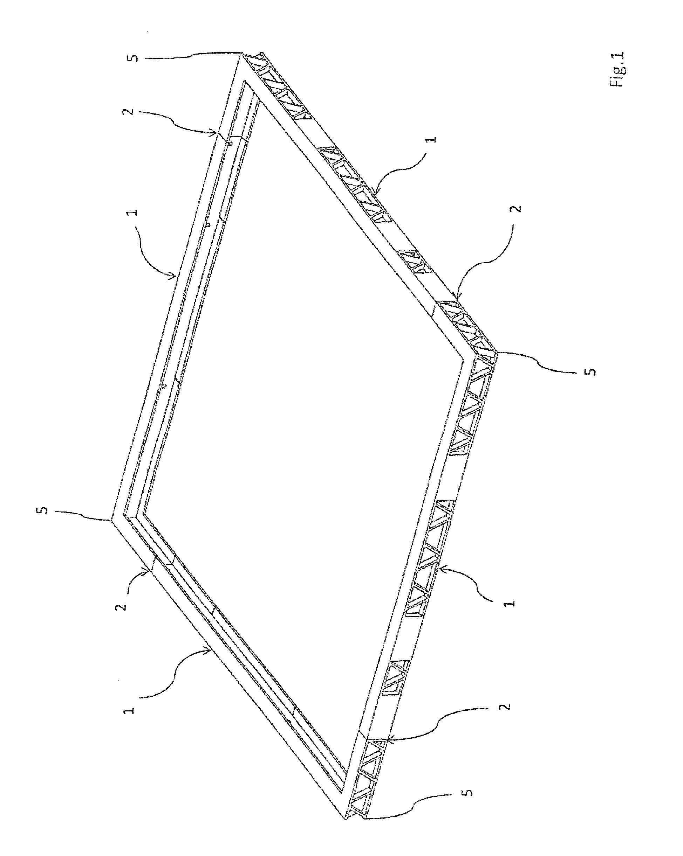

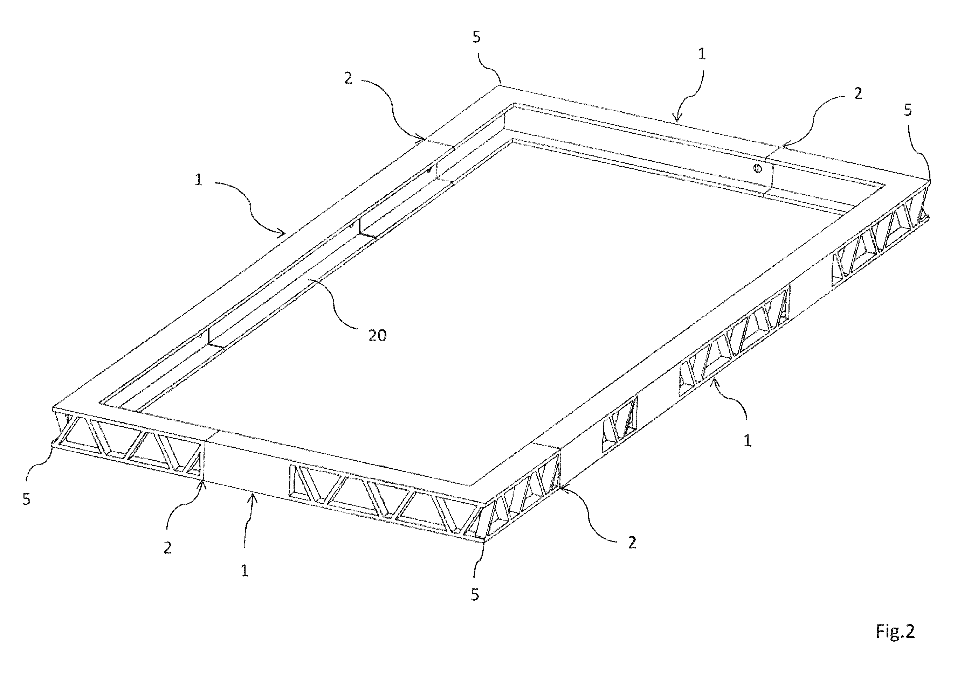

Die Fig. 1 und 2 zeigen jeweils einen viereckigen Filterrahmen, der aus vier Filterrahmenelementen 1 besteht. Die beiden Enden zweier benachbarter Filterrahmenelemente 1 sind unter Bildung jeweils eines Verbindungsbereiches 2 starr miteinander verbunden.

Jedes Filterrahmenelement 1 weist eine rechtwinklige Ausgestaltung auf und ist insoweit als Winkel ausgebildet. Jedes Filterrahmenelement 1 besteht aus zwei winklig zueinander angeordneten Filterrahmenelementabschnitten 3, 4.

Wie den Figuren zu entnehmen ist, umfasst jedes Filterrahmenelement 1 durch die erfindungsgemäße Ausgestaltung eine Ecke 5 des aus den Filterrahmenelementen 1 zusammengesetzten Filterrahmens, da die beiden Enden jedes Filterrahmenelementes 1 und damit die beiden Verbindungsbereiche 2 jeweils zwischen zwei benachbarten Ecken 5 des Filterrahmens angeordnet sind.

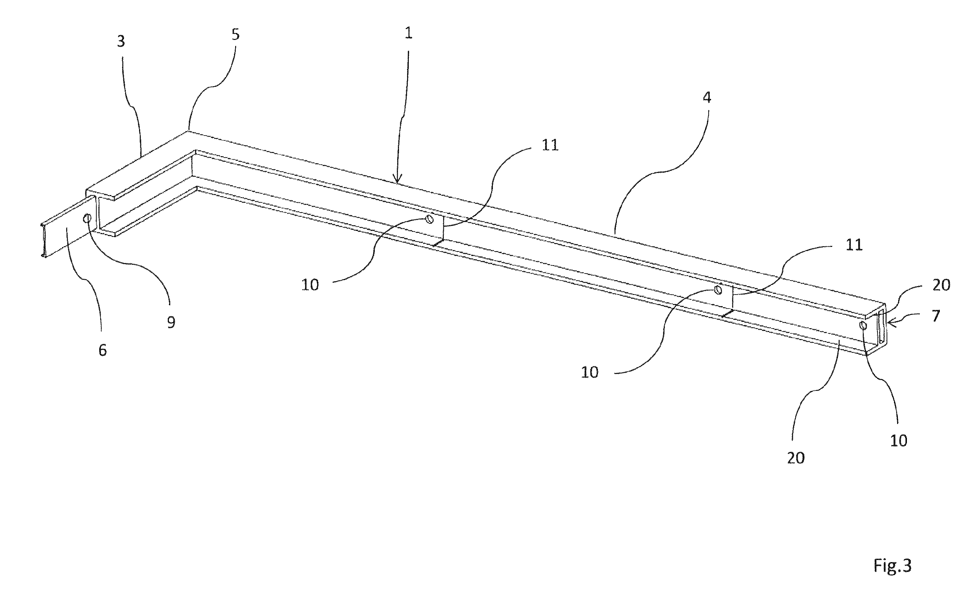

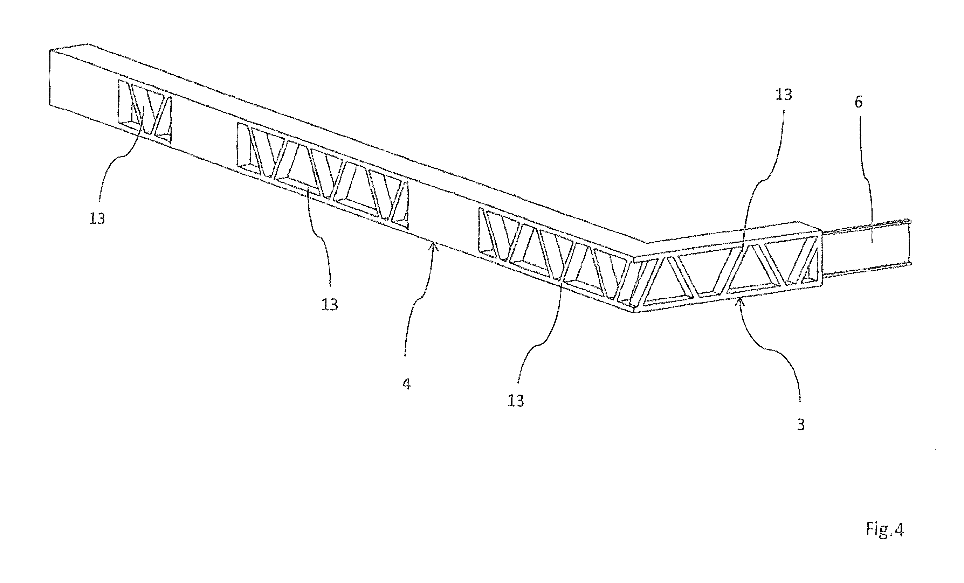

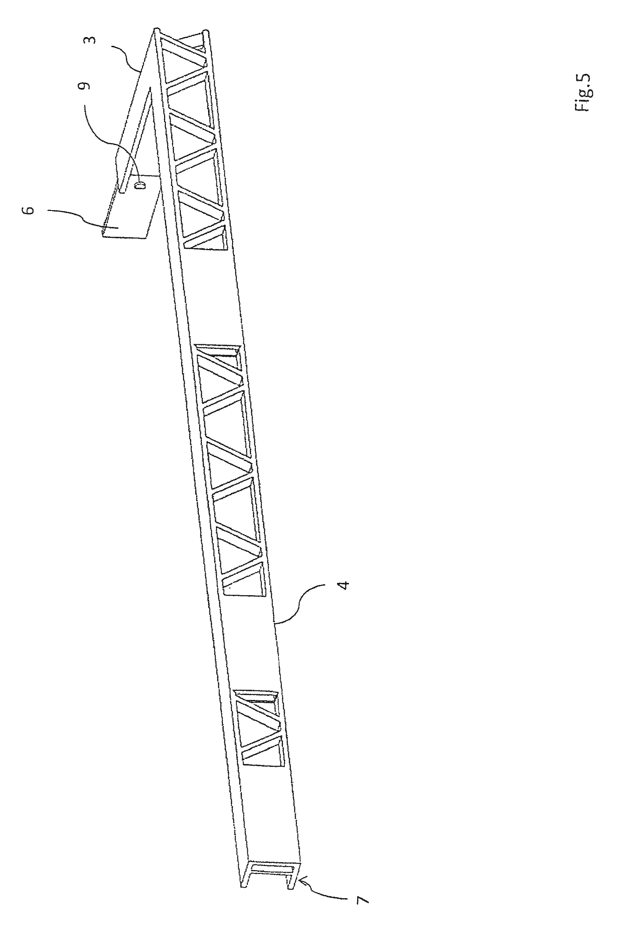

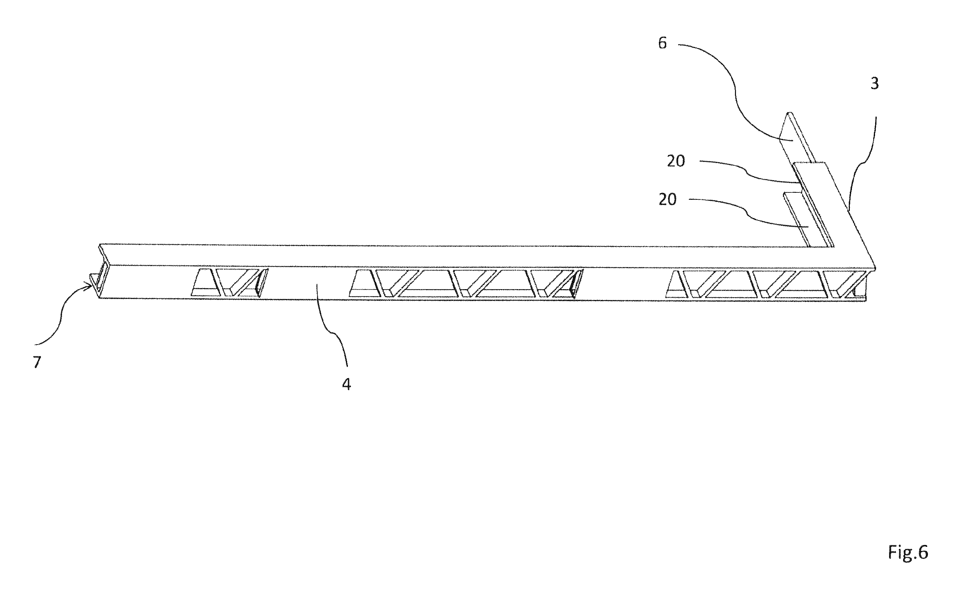

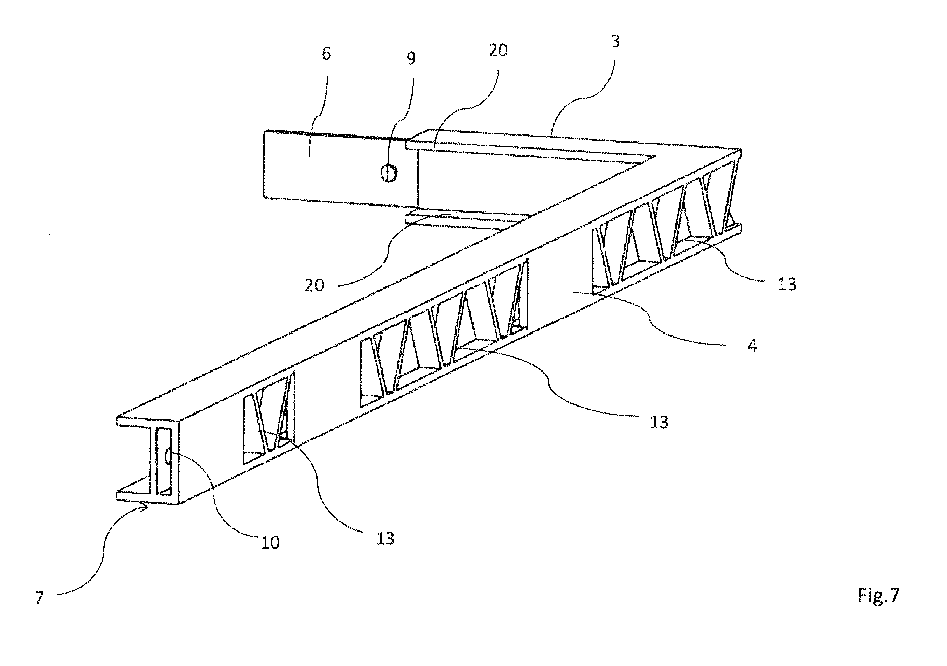

Die Fig. 3 bis 7 zeigen ein einzelnes Filterrahmenelement 1, das als Winkel ausgebildet ist und aus zwei in einem rechten Winkel winklig zueinander angeordneten Filterrahmenelementabschnitten 3, 4 besteht. An seinem einen freien Ende hat jedes Filterrahmenelement 1 ein Einführelement 6 in Form eines gegenüber dem Ende des Filterrahmenelementes 1 in Längserstreckung vorstehenden Bereichs und an seinem anderen freien Ende einen mit dem Einführelement 6 des benachbarten Filterrahmenelementes 1 korrespondierenden Einführbereich 7 zur Aufnahme eines Einführelementes 6. Das Einführelement 6 ist bei dem dargestellten Ausführungsbeispiel als Zunge und der Einführbereich 7 entsprechend schlitzartig ausgebildet.

Wie beispielsweise Fig. 3 zu entnehmen ist, weist das Einführelement 6 einen in orthogonaler Richtung zur Einführrichtung 8 gesehen vorstehenden Rastvorsprung 9 und der mit diesem Einführelement 6 zusammenwirkende Einführbereich 7 des benachbarten Filterrahmenelementes 1 eine mit dem Rastvorsprung 9 korrespondierende Ausnehmung 10 auf. Bei der Ausgestaltung beispielsweise nach Fig. 3 ist der Rastvorsprung 9 in etwa als halbkugelförmige Verdickung ausgebildet. Zum Einführen in Einführrichtung 8 gesehen oder auch zum späteren Lösen kann beispielsweise die als Rastvorsprung 9 ausgebildete Verdickung elastisch sein. Selbstverständlich ist es auch möglich, dass der die Verdickung tragende Bereich des Einführelementes 6 eine entsprechende Verlagerung ermöglicht. Alternativ oder in Ergänzung ist es auch möglich, dass der Einführbereich 7 im Bereich der Ausnehmung 10 eine entsprechende Verlagerung ermöglicht.

Wie insbesondere in Fig. 3 zu erkennen ist, weist in dem dargestellten Ausführungsbeispiel der Filterrahmenelementabschnitt 4 zwei Sollbruchstellen 11 auf. Auf diese Weise kann der Filterrahmenelementabschnitt 4 auf die gewünschte Länge werkzeuglos durch bloßes Abbrechen verkürzt werden, so dass mit ein und demselben Filterrahmenelement 1 unterschiedliche Größen an Filterrahmen zusammensteckbar sind.

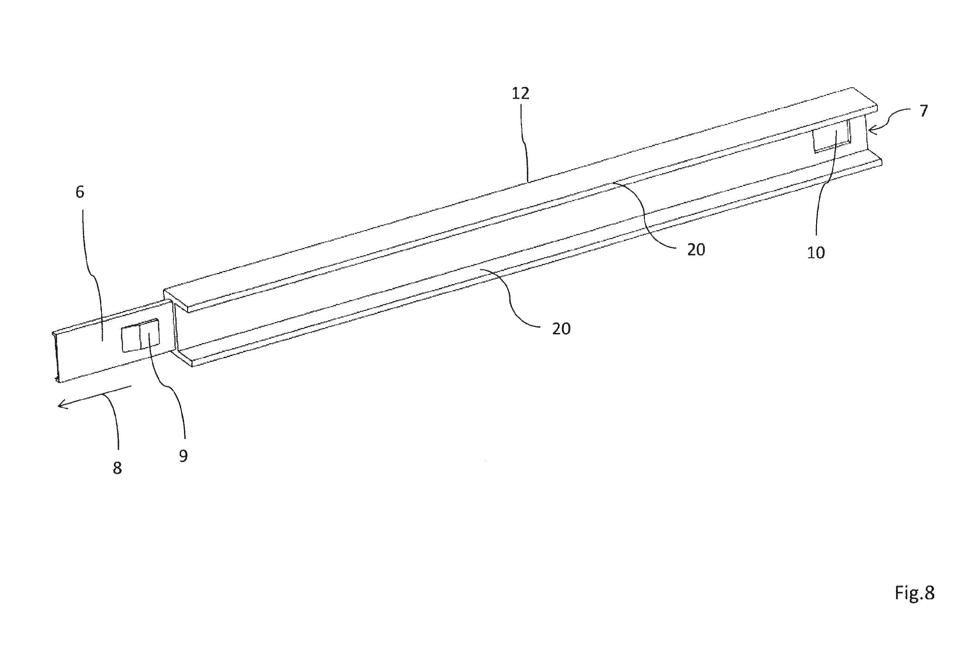

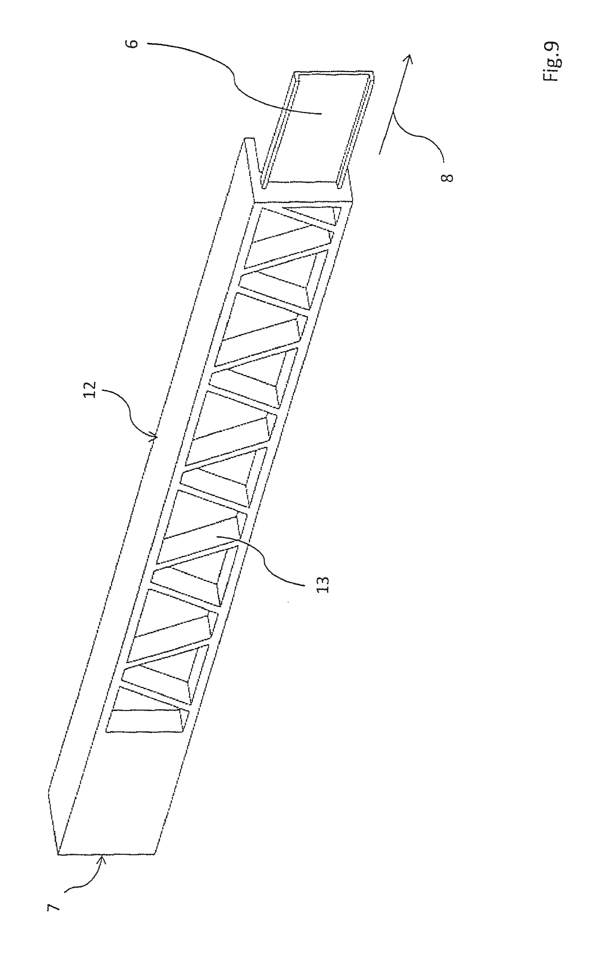

In den Fig. 8 und 9 ist ein Verlängerungselement 12 dargestellt, das seinerseits im Bereich des einen Endes ein Einführelement 6, insbesondere in Form eines gegenüber dem Ende in Längserstreckung vorstehenden Bereichs, und im Bereich seines anderen freien Ende einen Einführbereich 7 aufweist. Das Einführelement 6 und der Einführbereich 7 des Verlängerungselementes 12 sind so ausgebildet, dass beispielsweise das Einführelement 6 des Verlängerungselementes 12 in den Einführbereich 7 eines benachbarten Filterrahmenelementes 1 oder in den Einführbereich 7 eines benachbarten weiteren Verlängerungselementes 12 eingeführt werden kann.

Bei dem in Fig. 8 dargestellten Ausführungsbeispiel ist der Rastvorsprung 9 in der Draufsicht gesehen in etwa rechteckig ausgebildet, wobei für ein leichtes Einführen die Dicke des Rastvorsprunges 9 bis zu seiner dicksten Stelle in Einführrichtung 8 gesehen kontinuierlich zunimmt.

Wie beispielsweise den Fig. 1 und 2 zu entnehmen ist, weist jedes Filterrahmenelement 1 im Bereich der Seite, die später die Außenseite des Filterrahmens bildet, eine Verstärkung 13 in Form einer Verrippung auf.

Auch das Verlängerungselement 12 weist im Bereich der Seite, die später die Außenseite des Filterrahmens bildet, die Verstärkung 13 in Form einer Verrippung auf.

Das Filterelement 15 kann beispielsweise an der Innenseite des Filterrahmens angeklebt sein. Bei den in den Figuren 1 bis 11 dargestellten Ausführungsbeispielen weist jedes Filterrahmenelement 1 als Befestigungsmittel für das Filterelement 15 zwei innenseitig vorstehende, rahmenförmige und stegartig ausgebildete Anlageelemente 20 auf. Damit bildet sich eine u-förmige Aufnahme, die den Randbereich eines Filterelementes 15 umfasst. In den in den Figuren 1 bis 11 dargestellten Ausführungsbeispielen ist jedes Anlageelement 20 einstückig als Bestandteil des angrenzenden Filterrahmenelementes 1.

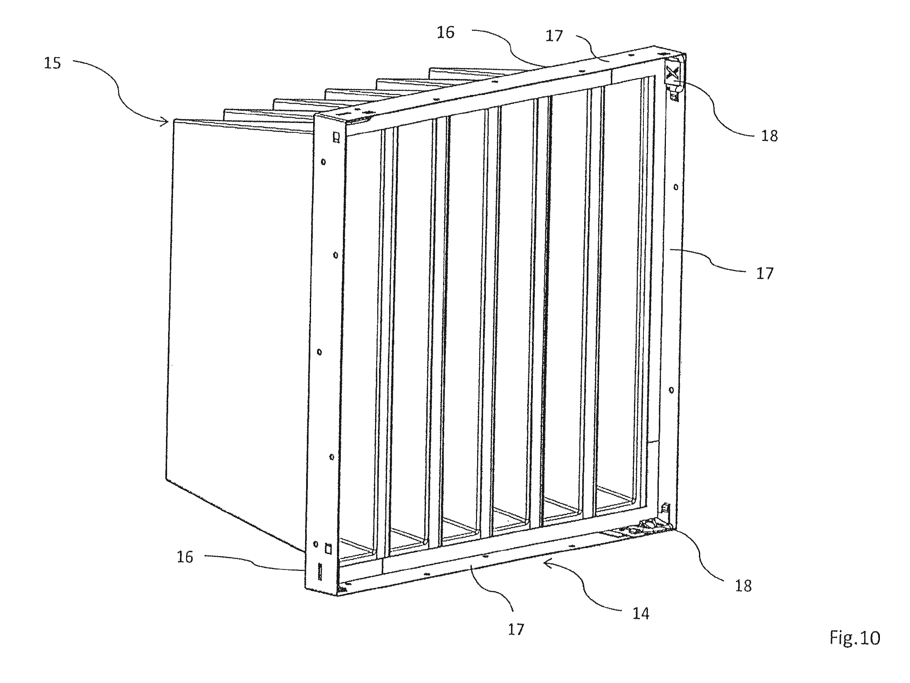

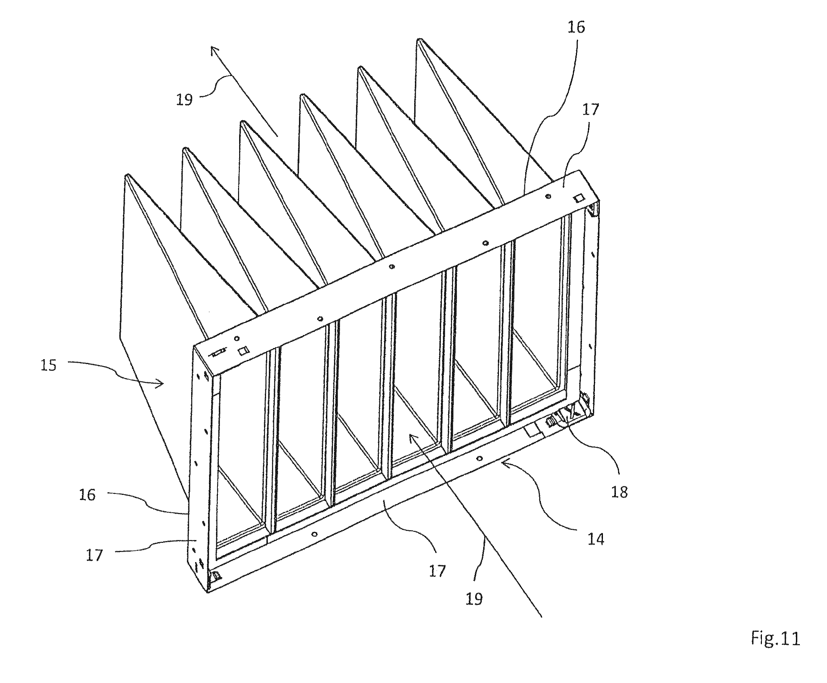

In den Fig. 10 und 11 ist ein Halterahmen 14, der auch als Zellenrahmen bezeichnet werden kann, dargestellt. Der Halterahmen 14 ist eckig ausgebildet und weist einen "L"-förmigen Querschnitt mit jeweils einem Anlageschenkel 16 und einen daran außenseitig angeformten Seitenschenkel 17 auf. In den Halterahmen 14 ist ein Filterrahmen eingesetzt, wobei der Filterrahmen auf den vier Anlageschenkeln 16 aufliegt. An dem Halterahmen ist im Bereich seiner Innenseite das Filterelement 15 fixiert, das in dem dargestellten Ausführungsbeispiel aus insgesamt sechs nebeneinander angeordneten Taschenfiltern besteht. Der Halterahmen 14 kann einteilig oder beispielsweise aus vier miteinander verbundenen Abschnitten bestehen.

Die innere Kontur des Halterahmens 14 ist so auf die äußere Kontur des Filterrahmens abgestimmt, dass der Filterrahmen zusammen mit dem daran fixierten Filterelement 15 reversibel in den Halterahmen 14 einsetzbar sind. Angedeutet ist im Bereich der vier Ecken des Halterahmens 14 jeweils eine Fixiereinrichtung 18. Jede Fixiereinrichtung 18 umfasst beispielsweise ein elastisch ausgebildetes und/oder federnd gelagertes Fixierelement mit einem Kontaktbereich. Jedes Fixierelement ist aus seiner Fixierposition, in der es den Filterrahmen in dem Halterahmen 14 blockiert, insbesondere fixiert, zum Einsetzen des Filterrahmens zusammen mit dem daran fixierten Filterelement 15 in den Halterahmen 14 bzw. zum Entfernen gegen seine Rückstellkraft in Richtung des angrenzenden Seitenschenkels 17 vorübergehend verlagerbar. Aufgrund seiner Rückstellkraft wird es anschließend automatisch wieder in seine Fixierposition zurückverlagert.

Die Fixiereinrichtungen 18 wirken in ihrer Fixierposition auf den Filterrahmen, so dass der Filterrahmen durch die Fixiereinrichtungen 18 entgegen der Einführrichtung 19 gegenüber dem Halterahmen 14 blockiert, insbesondere fixiert, wird.

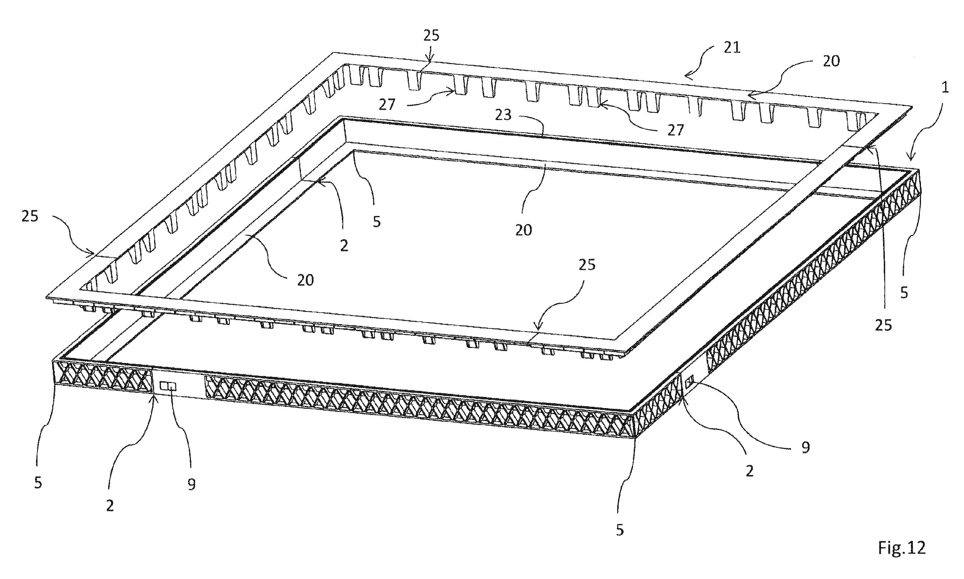

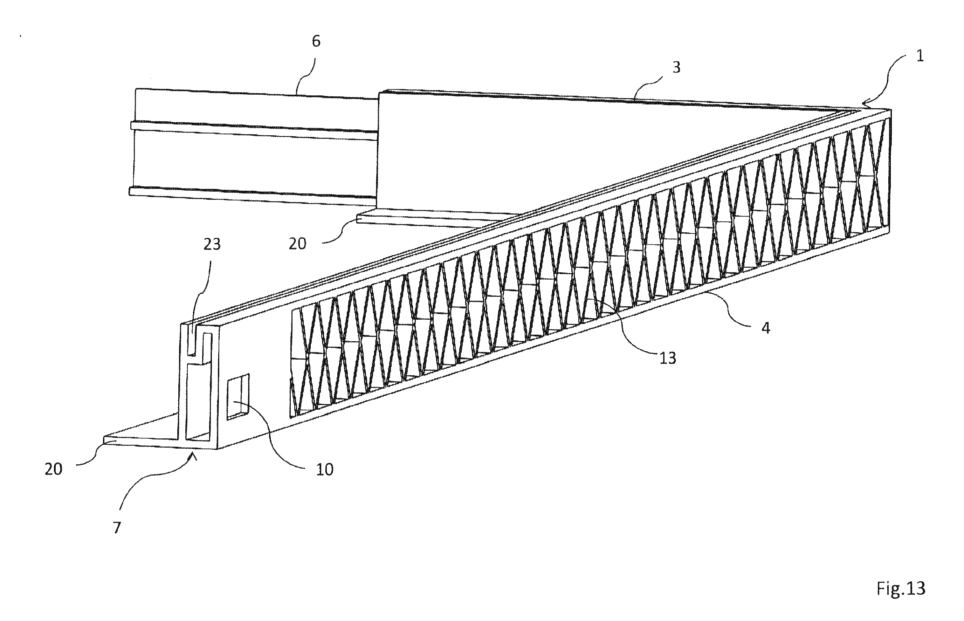

In den Figuren 12 bis 15 ist ein zweites Ausführungsbeispiel eines erfindungsgemäßen Filterrahmens dargestellt. Der Filterrahmen besteht wiederum aus vier Filterrahmenelementen 1. Sofern gewünscht kann die Seitenlänge des Filterrahmens durch geeignete Verlängerungselemente 12 vergrößert werden, so dass insoweit auch größere Filterrahmen herstellbar sind.

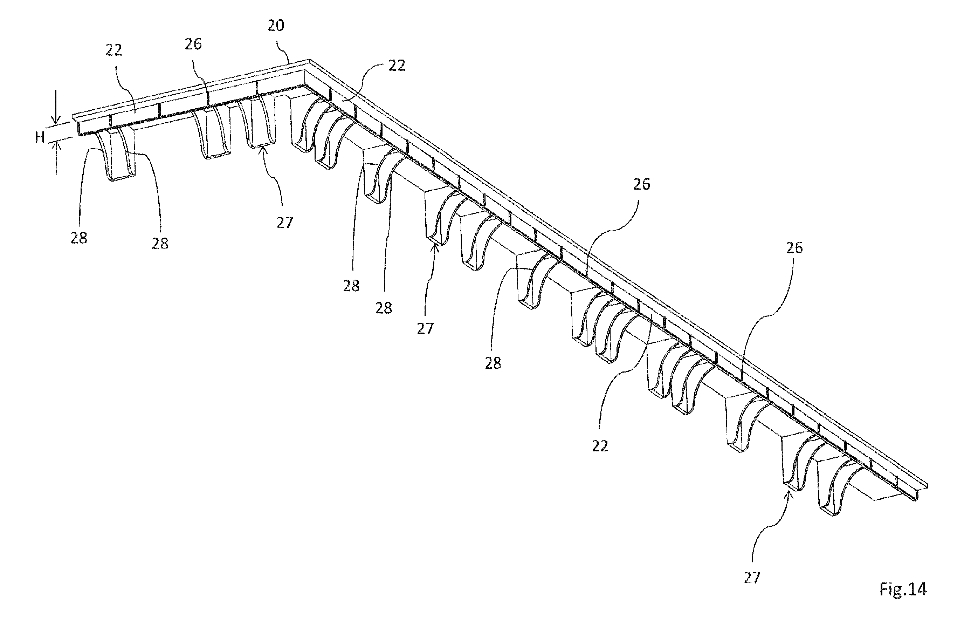

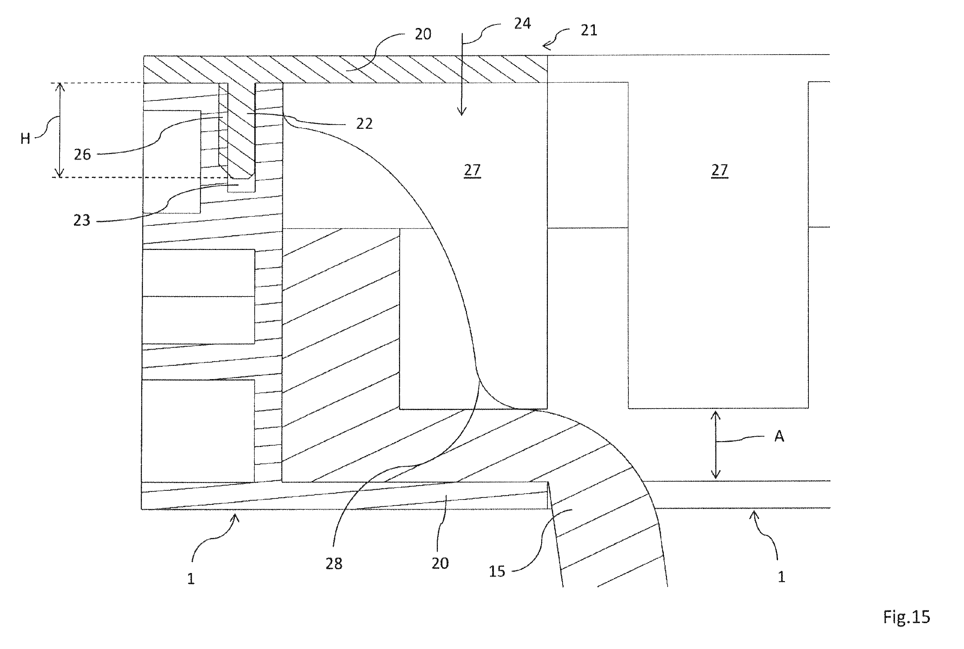

Wie beispielsweise Fig. 12 zu entnehmen ist, weist jedes Filterrahmenelement 1 als Befestigungsmittel ein gegenüber der Innenseite des Filterrahmens innenseitig vorstehendes, rahmenförmiges Anlageelement 20, das einstückig als Bestandteil des angrenzenden Filterrahmenelementes 1 ausgebildet sind. In Fig. 14 ist ein weiteres Anlageelement 20 als Befestigungsmittel dargestellt, das jedoch durch Klemmung lösbar an den angrenzenden Filterrahmenelementen 1 des Filterrahmens fixierbar ist. Die Anlageelemente 20 bilden - wie Fig. 12 zeigt - einen lösbaren Anlagerahmen 21. Hierzu weist jedes Anlageelement 20 des lösbaren Anlagerahmens 21 ein in Richtung des angrenzenden Filterrahmenelements 1 weisendes, linienförmig ausgebildetes Einführelement 22 auf. Das angrenzende Filterrahmenelement 1 hat einen mit dem Einführelement 22 korrespondierenden, nutenförmig ausgebildeten, Klemmbereich 23. Wie aus Fig. 15 erkennbar, ist die Montagerichtung 24 zum Einführen des Einführelementes 22 in den korrespondierenden Klemmbereich 23 orthogonal zu der von dem Filterahmen aufgespannten Ebene ausgerichtet.

Jedes Anlageelement 20 des lösbaren Anlagerahmens 21 ist dabei so ausgebildet, dass seine beiden Enden im montierten Zustand jeweils zwischen zwei benachbarten Ecken 5 des Filterrahmens angeordnet sind, wobei eine der jeweiligen zwei benachbarten Ecken 5, zwischen denen jeweils die beiden Enden eines Anlageelementes liegen, nicht übereinstimmend ist. Jedes Anlageelement 20 umfasst in dem dargestellten Ausführungsbeispiel eine Ecke 5 des Filterrahmens.

Die Form und die Anzahl der Anlageelemente 20 sind derart ausgebildet, dass aus den Anlageelementen 20 ein entsprechend dem Filterrahmen umlaufend ausgebildeter Anlagerahmen 21 gebildet wird.

Wie Fig. 12 zeigt, berühren sich die beiden Enden zweier benachbarter Anlageelemente 20 unter Bildung eines Berührungsbereichs 25 miteinander. Die Verbindungsbereiche 2 zwischen zwei Enden zweier benachbarter Filterrahmenelementabschnitte 3, 4 sind dabei versetzt zu den Berührungsbereichen 25 zwischen zwei Enden zweier benachbarter Anlageelemente 20 angeordnet.

Wie beispielsweise aus den Fig. 12 und 14 ersichtlich, erstreckt sich das Einführelement 22 über die ganze Länge des Anlageelementes 20. Die angrenzenden Filterrahmenelemente 1 weisen einen sich über die Länge des jeweiligen Filterrahmenelementes 1 erstreckenden Klemmbereich 23 auf.

Die Dicke des Einführelementes 22 nimmt, wie in Fig. 15 dargestellt, von seinem freien Ende gesehen zu. Dies erleichtert das Einführen. Zusätzlich weist das Einführelement 22 auf seiner, mit dem Klemmbereich 23 zusammenwirkenden Außenseite mehrere im Abstand zueinander angeordnete Klemmvorsprünge 26 auf, die parallel zur Montagerichtung 24 ausgerichtet sind.

Darüber hinaus weist jedes Anlageelement 20 mehrere im Abstand zueinander angeordnete Halteabschnitte 27 zum Halten des Randes eines in dem Filterrahmen angeordneten Filterelementes 15 auf. Die Halteabschnitte 27 sind beispielsweise in den Fig. 12 und 14 dargestellt. Jeder Halteabschnitt 27 weist eine derart gewölbt ausgerichtete und mit dem Rand des Filterelementes 15 zusammenwirkende Kontaktfläche 28 auf, dass der Rand des in dem Filterrahmen angeordneten Filterelementes 15 bei der Montage durch die Kontaktfläche 28 nach außen, d.h. in Richtung des Einführelementes 22 und orthogonal zur Montagerichtung 24, verlagert wird. In dem dargestellten Ausführungsbeispiel besteht die Kontaktfläche 28 jedes Halteabschnittes 27 aus zwei linienförmig ausgebildeten Kontaktbereichen. Ferner ist in dem dargestellten Ausführungsbeispiel der Abstand A zwischen dem einstückigen Anlageelement 20 und dem unteren Rand des Halteabschnittes 27 größer als die Dicke des Filterelementes 15 in diesem Bereich.

Wie in Fig. 14 dargestellt, erstreckt sich bei dem dargestellten Ausführungsbeispiel das jeweilige Einführelement 22 über die Länge des betreffenden Anlageelementes 20. Das Einführelement 22 weist dabei im Bereich der umfassten Ecke 5 die größte Höhe H auf. Die Höhe H des Einführelementes 22 nimmt zu den beiden freien Enden des Einführelementes 22 kontinuierlich ab.

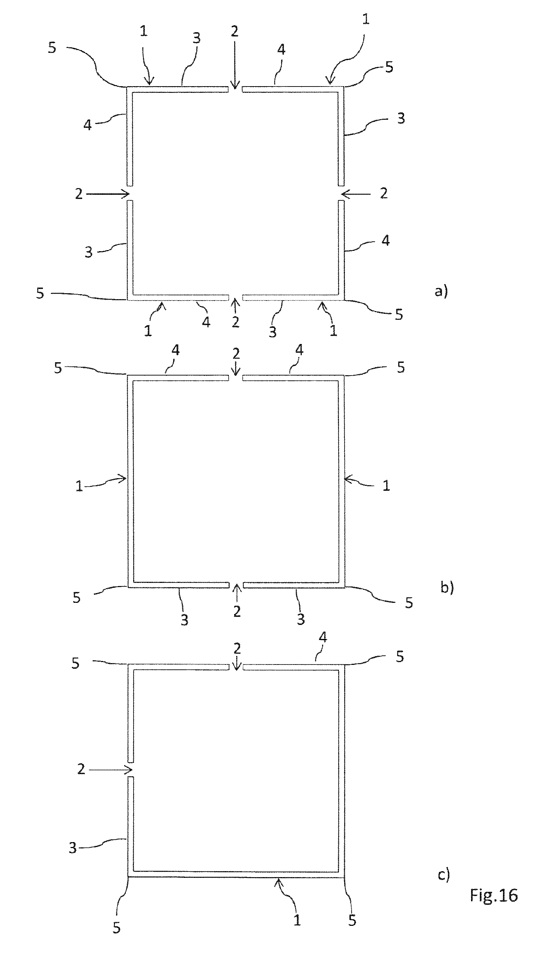

In Fig. 16 sind drei Varianten an Filterrahmen dargestellt, die aus unterschiedlich ausgestalteten Filterrahmenelementen 1 aufgebaut sind. Der besseren Verdeutlichung sind nur die groben Filterrahmenelemente 1 dargestellt. Benachbarte Filterrahmenelemente 1 sind noch nicht untereinander verbunden.

In Fig. 16 a sind vier winklig ausgestaltete Filterrahmenelemente 1 vorgesehen. Jedes Filterrahmenelement 1 umfasst dabei eine Ecke 5. Die beiden Enden jedes Filterrahmenelementes 1 liegen daher jeweils zwischen einer übereinstimmenden Ecke 5 und einer weiteren, jeweils nicht übereinstimmenden Ecke 5. Am Beispiel des linken oberen Filterrahmenelementes 1 ist die übereinstimmende Ecke 5 oben links und die nicht übereinstimmenden Ecken 5 sind oben rechts und unten links.

In Fig. 16 b sind zwei u-förmig ausgestaltete Filterrahmenelemente 1 vorgesehen. Jedes Filterrahmenelement 1 umfasst dabei zwei Ecken 5. So umfasst beispielsweise das linke Filterrahmenelement 1 die linke obere Ecke 5 und die linke untere Ecke 5. Jedes Ende eines Filterrahmenelementes 1 liegt zwischen zwei Ecken 5, welche nicht mit den Ecken 5 des anderen Endes dieses Filterrahmenelementes 1 übereinstimmen. So liegt bei beiden Filterrahmenelementen 1 das jeweilige obere Ende zwischen der linken oberen Ecke 5 und der rechten oberen Ecke 5, wohingegen das jeweilige untere Ende zwischen der linken unteren Ecke 5 und der rechten unteren Ecke 5 liegt.

Bei dem Ausführungsbeispiel nach Fig. 16 c besteht der Filterrahmen aus zwei Filterrahmenelementen 1. Das linke Filterrahmenelement 1 umfasst dabei lediglich die linke obere Ecke 5. Das links oben liegende Filterrahmenelement 1 ist L-förmig ausgebildet. Dabei ist die übereinstimmende Ecke 5 oben links und die nicht übereinstimmenden Ecken 5 sind oben rechts und unten links. Das weitere Filterrahmenelement 1 umfasst hingegen drei Ecken 5, nämlich die linke untere Ecke 5, die rechte untere Ecke 5 sowie die rechte obere Ecke 5. Die beiden Enden dieses weiteren Filterrahmenelementes 1 weisen die übereinstimmende Ecke 5 oben links und die nicht übereinstimmenden Ecken 5 oben rechts und unten links auf.

## Patentansprüche

1. Filterrahmen zum Fixieren von zumindest einem Filterelement (15), wobei der Filterrahmen eckig, insbesondere viereckig, ausgebildet ist und aus zumindest zwei Filterrahmenelementen (1) besteht und wobei die beiden Enden zweier benachbarter Filterrahmenelemente (1) unter Bildung jeweils eines Verbindungsbereichs (2) miteinander starr verbunden sind, **dadurch gekennzeichnet, dass** jedes Filterrahmenelement (1) so ausgebildet ist, dass seine beiden Enden und damit seine beiden Verbindungsbereiche (2) unter Bildung entsprechender Filterrahmenelementabschnitte (3, 4) jeweils zwischen zwei benachbarten Ecken (5) des Filterrahmens angeordnet sind, wobei zumindest eine der jeweiligen zwei benachbarten Ecken (5), zwischen denen jeweils die beiden Enden liegen, nicht übereinstimmend ist und somit jedes Filterrahmenelement (1) zumindest eine Ecke (5) des aus den Filterrahmenelementen (3, 4) zusammengesetzten Filterrahmens umfasst.

2. Filterrahmen nach dem vorhergehenden Anspruch, **dadurch gekennzeichnet, dass** zumindest ein Filterrahmenelement (1) als Winkel ausgebildet ist und aus zwei, insbesondere in einem rechten Winkel, winklig zueinander angeordneten Filterrahmenelementabschnitten (3, 4) besteht.

3. Filterrahmen nach einem der vorhergehenden Ansprüche, **dadurch gekennzeichnet, dass** zumindest ein Filterrahmenelement (1) an seinem einen freien Ende ein Einführelement (6), insbesondere in Form eines gegenüber dem Ende in Längserstreckung vorstehenden Bereichs, und an seinem anderen freien Ende einen mit dem Einführelement (6) des benachbarten Filterrahmenelements (1) korrespondierenden Einführbereich (7) zur Aufnahme eines Einführelementes (6) aufweist.

4. Filterrahmen nach dem vorhergehenden Anspruch, **dadurch gekennzeichnet, dass** das Einführelement (6) als Zunge ausgebildet ist.

5. Filterrahmen nach einem der vorhergehenden Ansprüche, **dadurch gekennzeichnet, dass** das Einführelement (6) einen in orthogonaler Richtung zur Einführrichtung (8) gesehen vorstehenden Rastvorsprung (9) und der mit diesem Einführelement (6) zusammenwirkende Einführbereich (7) des benachbarten Filterrahmenelements (1) eine mit dem Rastvorsprung (9) korrespondierende Ausnehmung (10) aufweist.

6. Filterrahmen nach einem der Ansprüche 3 bis 5, **dadurch gekennzeichnet, dass** der Einführbereich (7) einen in orthogonaler Richtung zur Einführrichtung (8) gesehen vorstehenden Rastvorsprung (9) und das mit diesem Einführbereich (7) zusammenwirkende Einführelement (6) des benachbarten Filterrahmenelements (1) eine mit dem Rastvorsprung (9) korrespondierende Ausnehmung (10) aufweist.

7. Filterrahmen nach einem der Ansprüche 5 oder 6, **dadurch gekennzeichnet, dass** zumindest ein Rastvorsprung (9) als Verdickung ausgebildet ist.

8. Filterrahmen nach einem der Ansprüche 5 bis 7, **dadurch gekennzeichnet, dass** zumindest ein Rastvorsprung (9) gegen eine Rückstellkraft vorübergehend aus seiner Fixierposition in seine Freigabeposition verlagerbar ist.

9. Filterrahmen nach einem der vorhergehenden Ansprüche, **dadurch gekennzeichnet, dass** zumindest ein Filterrahmenelement (1) eine Sollbruchstelle (11) zur werkzeuglosen Verkürzung aufweist.

10. Filterrahmen nach einem der Ansprüche 3 bis 9, **dadurch gekennzeichnet, dass** zumindest ein Filterrahmenelement (1) mittels eines an einem der beiden Enden des Filterrahmenelementes (1) anbringbaren Verlängerungseiemetes (12) verlängerbar ist, wobei ein Ende des Verlängerungselementes (12) ein Einführelement (6), insbesondere in Form eines gegenüber dem Ende in Längserstreckung vorstehenden Bereichs, und das andere freie Ende einen Einführbereich (7) aufweist.

11. Filterrahmen nach einem der vorhergehenden Ansprüche, **dadurch gekennzeichnet, dass** zumindest ein Filterrahmenelement (1) aus Kunststoff besteht.

12. Filterrahmen nach einem der vorhergehenden Ansprüche, **dadurch gekennzeichnet, dass** zumindest ein Filterrahmenelement (1) eine Verstärkung (13), insbesondere in Form einer Verrippung, aufweist.

13. Filterrahmen nach einem der vorhergehenden Ansprüche, **dadurch gekennzeichnet, dass** der Filterrahmen zumindest ein Befestigungsmittel für das Filterelement (15) aufweist.

14. Filterrahmen nach dem vorhergehenden Anspruch, **dadurch gekennzeichnet, dass** zumindest ein Befestigungsmittel als ein, gegenüber der Innenseite des Filterrahmens innenseitig vorstehendes, leisten- oder rahmenförmiges Anlageelement (20) ausgebildet ist, welches an dem Filterrahmen, insbesondere lösbar, zum Halten des Filterelementes (15) anbringbar ist.

15. Filterrahmen nach dem vorhergehenden Anspruch, **dadurch gekennzeichnet, dass** die Form und die Anzahl des Anlageelementes (20) / der Anlageelemente (20) derart ausgebildet sind, dass aus den Anlageelementen (20) ein entsprechend dem Filterrahmen umlaufend ausgebildeter Anlagerahmen (21) gebildet wird.

16. Filterrahmen nach dem vorhergehenden Anspruch, **dadurch gekennzeichnet, dass** wenigstens ein Anlageelement (20) einstückig als Bestandteil des angrenzenden Filterrahmenelementes (1) ausgebildet ist.

17. Filterrahmen nach einem der Ansprüche 14 bis 16, **dadurch gekennzeichnet, dass** wenigstens ein Anlageelement (20) zumindest eines Anlagerahmens (21) lösbar, insbesondere durch Klemmung lösbar, an dem(den) angrenzenden Filterrahmenelement(en) (1) des Filterrahmens fixierbar ist.

18. Filterrahmen nach einem der Ansprüche 14 bis 17, **dadurch gekennzeichnet, dass** bei zumindest einem, insbesondere jedem, Anlageelement (20) die körperliche Ausgestaltung so ist, dass seine beiden Enden im montierten Zustand jeweils zwischen zwei benachbarten Ecken (5) des Filterrahmens angeordnet sind, wobei zumindest eine der jeweiligen zwei benachbarten Ecken (5), zwischen denen jeweils die beiden Enden liegen, nicht übereinstimmend ist und somit das zumindest eine Anlageelement (1) zumindest eine Ecke (5) des Filterrahmens umfasst.

19. Filterrahmen nach einem der Ansprüche 14 bis 18, **dadurch gekennzeichnet, dass** sich die beiden Enden zweier benachbarter Anlageelemente (20) unter Bildung eines Berührungsbereichs (25) miteinander berühren und dass die Verbindungsbereiche (2) zwischen zwei Enden zweier benachbarter Filterrahmenelementabschnitte (3, 4) versetzt zu den Berührungsbereichen (25) zwischen zwei Enden zweier benachbarter Anlageelemente (20) angeordnet sind.

20. Filterrahmen nach einem der Ansprüche 14 bis 19, **dadurch gekennzeichnet, dass** zumindest ein Anlageelement (20) wenigstens ein in Richtung des angrenzenden Filterrahmenelements (1) weisendes, insbesondere linienförmig ausgebildetes, Einführelement (22) aufweist und dass das angrenzende Filterrahmenelement (1) wenigstens einen, mit dem(den) Einführelement(en) (22) korrespondierenden, insbesondere nutenförmig ausgebildeten, Klemmbereich (23) aufweist, wobei vorzugsweise die Montagerichtung (24) zum Einführen eines Einführelementes (22) in den korrespondierenden Klemmbereich (23) orthogonal zu der von dem Filterahmen aufgespannten Ebene ausgerichtet ist.

21. Filterrahmen nach dem vorhergehenden Anspruch, **dadurch gekennzeichnet, dass** sich bei zumindest einem Anlageelement (20) das Einführelement (22) über die ganze Länge des Anlageelementes (20) erstreckt und dass sich bei dem(den) angrenzenden Filterrahmenelement(en) (1) der Klemmbereich (23) ebenfalls über die Länge des jeweiligen Filterrahmenelementes (1) erstreckt.

22. Filterrahmen nach einem der Ansprüche 20 bis 21, **dadurch gekennzeichnet, dass** die Materialstärke/Materialdicke zumindest eines Einführelementes (22) von seinem freien Ende gesehen zunimmt.

23. Filterrahmen nach einem der Ansprüche 20 bis 22, **dadurch gekennzeichnet, dass** wenigstens ein Einführelement (22) auf seiner, mit dem Klemmbereich (23) zusammenwirkenden Außenseite zumindest einen Klemmvorsprung (26) aufweist.

24. Filterrahmen nach einem der Ansprüche 21 bis 23, **dadurch gekennzeichnet, dass** wenigstens ein Einführelement (22) im Bereich einer Ecke (5) die größte Höhe H aufweist und die Höhe H des Einführelementes (22) zu seinen beiden freien Enden, insbesondere kontinuierlich, abnimmt.

25. Filterrahmen nach einem der Ansprüche 14 bis 24, **dadurch gekennzeichnet, dass** zumindest ein Anlageelement (20) wenigstens einen Halteabschnitt (27) zum Halten des Randes eines in dem Filterrahmen angeordneten Filterelementes (15) aufweist.

26. Filterrahmen nach dem vorhergehenden Anspruch, **dadurch gekennzeichnet, dass** zumindest ein Halteabschnitt (27) eine derart gewölbt oder schräg ausgerichtete und mit dem Filterelement (15) zusammenwirkende Kontaktfläche (28) aufweist, dass der Rand des in dem Filterrahmen angeordneten Filterelementes (15) bei der Montage durch die Kontaktfläche (28) nach außen verlagert wird.

27. System umfassend einen Halterahmen (14), einen in den Halterahmen (14) einsetzbaren Filterrahmen sowie zumindest ein an dem Filterrahmen fixiertes Filterelement (15), wobei der Halterahmen (14) eckig, insbesondere viereckig, ausgebildet ist und einen L-förmigen Querschnitt mit einem Anlageschenkel (16) und mit einem daran außenseitig angeformten Seitenschenkel (17) hat, und wobei die innere Kontur des Halterahmens (14) so auf die äußere Kontur des Filterrahmens abgestimmt ist, dass der Filterrahmen reversibel in den Halterahmen (14) einsetzbar sind und der Filterrahmen mittels zumindest zweier über den Umfang des Filterrahmens verteilt angeordneter Fixiereinrichtungen (18) entgegen der Einführrichtung (19) gegenüber dem Halterahmen (14) blockierbar, insbesondere fixierbar, ist und wobei der Filterrahmen nach einem der vorhergehenden Ansprüche ausgebildet ist.

28. System nach dem vorhergehenden Anspruch, **dadurch gekennzeichnet, dass** zwischen der inneren Kontur des Halterahmens (14) und der äußeren Kontur des Filterrahmens ein Spiel von etwa 2 bis 10 mm in jeder zu zumindest einer Seite orthogonalen Richtung ist.
